# EUROPEAN PATENT APPLICATION

(11) **EP 3 046 123 A2**
(43) Date of publication of application: **20.07.2016**
(21) Application number: 15163582.8
(22) Date of filing: 14.04.2015
(51) Int. Cl.: H01G 9/20

(54) **SEALING STRUCTURE OF A DYE-SENSITIZED SOLAR CELL AND SEALING METHOD THEREOF**

(30) Priority: 14.01.2015 KR 20150006693; 14.01.2015 KR 20150006694
(71) Applicant: Sangbo Corporation, Gyeonggi-do 415-866 (KR)
(72) Inventor: Lee, Jeong Gwan, 704-718 Daegu (KR); Yoon, Jeong Hun, 300-832 Daejeon (KR); Joung, In Sang, 676-806 Gyeongsangnam-do (KR)
(74) Representative: Stöckeler, Ferdinand

(57) **Abstract**

The present invention relates to a method of sealing a dye-sensitized solar cell, which seals a dye-sensitized solar cell module filled and sealed with an electrolyte therein by surrounding the outer side of the solar cell module. The method includes: a dipping step of dipping the solar cell module into a liquid-state sealing agent; and a hardening step of forming a sealer on the outer side of the solar cell module by hardening the liquid-state sealing agent, with the solar cell module dipped therein, and so it is possible to achieve complete sealing so that an air pocket inside a solar cell module is not formed.

## Description

### CROSS-REFERENCE(S) TO RELATED APPLICATIONS

This application claims priority to Korean Patent Application Nos. 10-2015-0006693 and 10-2015-0006694, filed on January 14, 2015, which are incorporated herein by reference in their entirety.

### BACKGROUND OF THE INVENTION

### Field of the Invention

Exemplary embodiment of the present invention relates to a sealing structure of a dye-sensitized solar cell and a sealing method thereof, and more particularly, a sealing structure of a dye-sensitized solar cell that seals the outer side of a dye-sensitized solar cell filled and sealed with an electrolyte therein, and a sealing method thereof.

### Description of Related Art

In general, a solar cell can be classified into a solar cell made of an inorganic material such as silicon and a compound semiconductor and an organic solar cell (including a DSC (Dye-Sensitized Solar Cell) and an organic D-A solar cell).

A dye-sensitized solar cell, which has been developed to have high energy efficiency using organic dye and the nanotechnology, generates electricity using dye that generates electricity when it receives sunlight.

The dye-sensitized solar cell is inexpensive and has high energy efficiency because inexpensive organic dye and the nanotechnology are used, so that it is possible to reduce the manufacturing cost to around 1/3, up to a maximum of 1/5 in comparison to the existing solar cells using silicon. In particular, when is used with glass, it can produce transparent and various colors and transmit the visible light, so it can be attached to the windows of a building or the windows of a vehicle in use. As described above, since the dye-sensitized solar cell can be manufactured at a low cost and has high efficiency, it has been used in various fields.

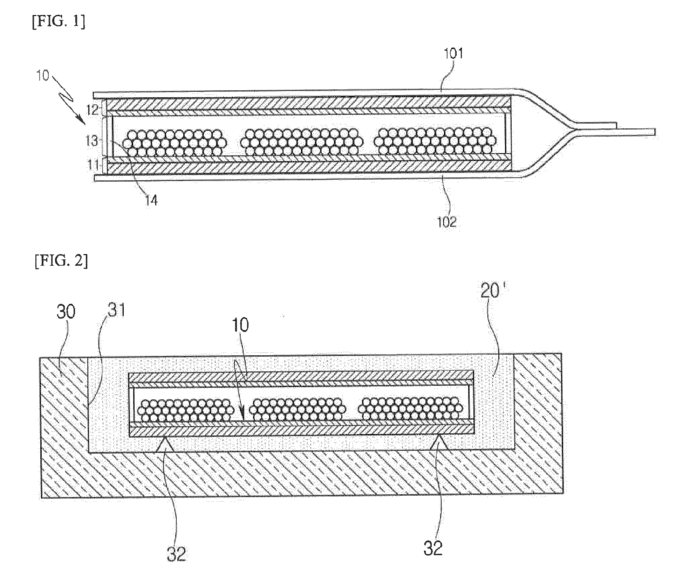

Referring to FIG. 1 showing an example of a dye-sensitized solar cell of the related art, which includes a working electrode 11 coated with nanoparticle oxide and a counter electrode 12 coated with platinum or carbon, which are disposed on transparent conductive substrates spaced from each other with a predetermined gap, and an electrolyte layer 13 filled with an electrolyte between the working electrode 11 and the counter electrode 12.

Dye molecules adsorbed to the nano-semconductor oxide absorb sunlight, thereby producing electron-hole pairs.

The dye-sensitized solar cell is manufactured by disposing the working electrode 11 and the counter electrode 12 at a predetermined distance from each other and then injecting an electrolyte solution into the space between the electrodes, and to this end, an electrolyte injection port for injecting an electrolyte is formed at a side of the working electrode 11 or the counter electrode 12. That is, an electrolyte injection port is bored and an electrolyte is injected, and then the electrolyte injection port is primarily sealed and finished by an organic polymer such as epoxy. However, when the injected electrolyte expands or vaporizes in a high-temperature environment, there is a concern of leakage of electrolyte through the electrolyte injection port.

Accordingly, the entire outer side of the dye-sensitized solar cell module primarily sealed has been secondarily sealed with a laminate film to improve durability. The secondary sealing structure is achieved by bonding two laminate films 101 and 102, as shown in FIG. 1, and for this structure, solid-state films are bonded with a solar cell module therebetween, so an air pocket is formed at a side of the solar cell module. When the air pocket remains, it decreases durability of the dye-sensitized solar cell, so it should be removed by a specific process.

On the other hand, the sealing process using laminate films are performed at a high temperature over 150 degrees, so an electrolyte solvent in the dye-sensitized solar cell is volatilized due to the high temperature and it decreases the efficiency of the solar cell.

### SUMMARY OF THE INVENTION

An embodiment of the present invention is directed to provide a sealing structure of a dye-sensitized solar cell that can achieve complete sealing so that an air pocket inside a solar cell module is not formed, and a sealing method thereof, in order to improve problems with the sealing structures of a dye-sensitized solar cells and sealing methods thereof in the related art.

In accordance with an embodiment of the present invention, a sealing structure of a dye-sensitized solar cell includes: a dye-sensitized solar cell filled and sealed with an electrolyte therein; and a sealer made of a transparent sealing agent and sealing the solar cell module by surrounding the outer side of the solar cell module.

The sealer may be formed by hardening a liquid-state sealing agent.

The sealer may be formed by hardening a gel-state sealing agent.

The liquid-state sealing agent may include any one of silicon resin, ethylene vinyl acetate, polypropylene, polycarbonate, and polyethersulfone.

The sealing agent may further include at least any one of an ultraviolet protector, an antistatic agent, and a light diffuser.

The solar cell module may include: a working electrode formed by coating a nanoparticle oxide on a transparent conducive substrate and adsorbing photosensitive dye molecules on the coated oxide; a counter electrode formed by coating platinum or carbon on a conductive substrate; and an electrolyte layer filled with an electrolyte between the working electrode and the counter electrode.

The working electrode and the counter electrode may be made of a soft material.

In accordance with another embodiment of the present invention, a method of sealing a dye-sensitized solar cell, which seals a dye-sensitized solar cell module filled and sealed with an electrolyte therein by surrounding the outer side of the solar cell module, includes: a dipping step of dipping the solar cell module into a liquid-state sealing agent; and a hardening step of forming a sealer on the outer side of the solar cell module by hardening the liquid-state sealing agent, with the solar cell module dipped therein.

In the dipping step, a solar cell module manufactured in advance may be inserted into a cavity of a sealing mold manufactured in advance and then the cavity of the sealing mold may be filled with a sealing agent.

Jigs spacing the solar cell module away from the inner side of the cavity of the sealing mold may be disposed into the cavity and then the solar cell module may be seated on the jigs.

The method may further include separating the sealing mold after the sealer adheres to the solar cell module in the hardening step.

The sealing agent may be hardened in a drying space at a temperature of 60 to 80 degrees for 20 to 60 minutes, in the hardening step

The liquid-state sealing agent may include silicon resin.

The liquid-state sealing agent may include at least any one of an ultraviolet protector, an antistatic agent, and a light diffuser.

Bubbles in the sealing agent that is being hardened may be removed by rotating the sealing mold, in the hardening step.

In accordance with an embodiment of the present invention, a method of sealing a flexible dye-sensitized solar cell, which seals a dye-sensitized solar cell module filled and sealed with an electrolyte therein by surrounding the outer side of the solar cell module, includes; a setting step of seating the solar cell module onto a gel-state lower sealing agent; a covering step of covering the solar cell module seated on the lower sealing agent with a gel-state upper sealing agent; a pressing step of pressing the upper sealing agent and the lower sealing agent to surround the outer side of the solar cell module with the upper sealing agent or the lower sealing agent; and a hardening step of forming a sealer on the outer side of the solar cell module by hardening the gel-state sealing agent, with the solar cell module pressed.

The lower sealing agent may be put and seat in a cavity of a sealing press manufactured in advance, in the setting step.

The upper sealing agent may be increased in temperature by heating the sealing press in the setting step.

The upper sealing agent may be pressed from above the solar cell module in the pressing step.

The lower sealing agent and the upper sealing agent may be pressed from the sides of the solar cell module in the pressing step.

According to the sealing structure and the sealing method of a dye-sensitized solar cell according to the present invention described above, it is possible to seal the solar cell without an air pocket inside the solar cell module, so it is possible to improve durability by suppressing volatilization of the electrolyte at a high temperature and it is also possible to improve efficiency of the cell by preventing permeation of water.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

### BRIEF DESCRIPTION OF THE DRAWINGS

FIG. 1 is a schematic side view showing a sealing structure of a dye-sensitized solar cell according to the related art.
FIGS. 2 and 3 are conceptual views showing a sealing structure of a dye-sensitized solar cell according to an embodiment of the present invention.
FIG. 4 is a flowchart illustrating a method of sealing a dye-sensitized solar cell according to an embodiment of the present invention.
FIGS. 5 and 6 are conceptual views showing a method of sealing a dye-sensitized solar cell according to another embodiment of the present invention.
FIG. 7 is a flowchart illustrating a method of sealing a dye-sensitized solar cell according to another embodiment of the present invention.

### DESCRIPTION OF SPECIFIC EMBODIMENTS

Hereinafter, preferred embodiments of the present invention are described in detail with reference to the accompanying drawings.

### First Embodiment

Referring to FIGS. 1 to 3, a sealing structure of a dye-sensitized solar cell according to an embodiment of the present invention includes a dye-sensitized solar cell module 10 filled and sealed with an electrolyte therein and a sealer 20 sealing the solar cell module 10 by surrounding its outer side.

The solar cell module 10 includes a working electrode 11 coated with nanoparticle oxide on a transparent conductive substrate, a counter electrode 12 coated with platinum or carbon on a conductive substrate, and an electrolyte layer 13 filled with an electrolyte between the working electrode 11 and the counter electrode 12.

The solar cell module 10 is a typical dye-sensitized solar cell with the working electrode 11, the counter electrode 12, and the electrolyte layer 13 arranged in a sandwich structure and photosensitive dye molecules adsorbed to the nanoparticle oxide.

Separators 14 for keeping an electrolyte in between the working electrode 11 and the counter electrode 12 are formed in the electrolyte layer 13. The working electrolyte 11 and the counter electrolyte 12 are made of a soft material, that is, a flexible film.

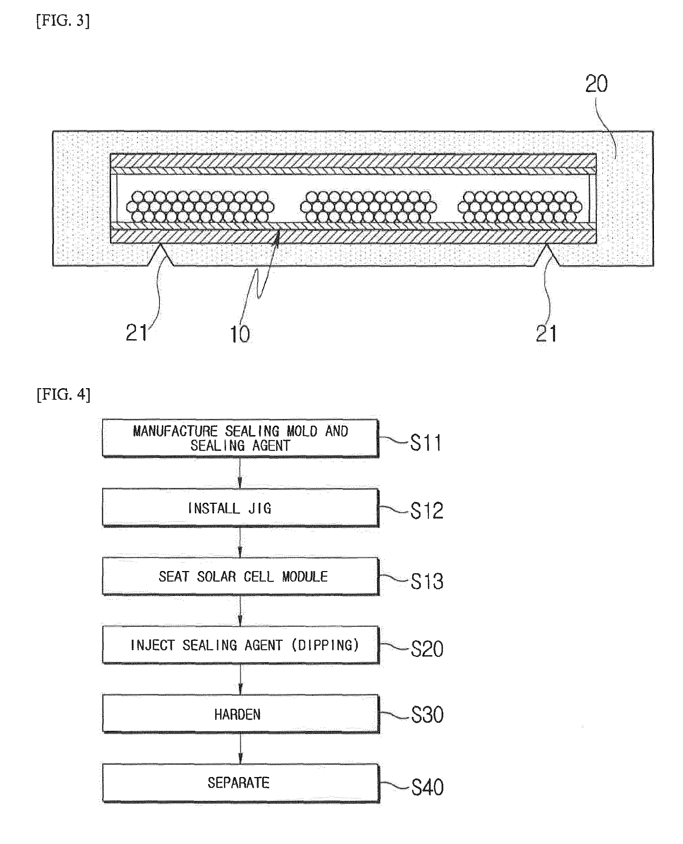

The sealer 20 shown in FIG. 3 is made of a transparent sealing agent that can transmit the sunlight. As the transparent sealing agent, there are EVA (Ethylene Vinyl Acetate), polypropylene, polycarbonate, and PES (PolyetherSulfone), including silicon resin.

The sealing agent stated in this embodiment contains silicon resin as the main raw material and may be added with a functional additive such as an ultraviolet protector, an antistatic agent, and a light diffuser.

The sealing agent is in a liquid state, and is put on the outer side of the solar cell module 10 and then hardened, thereby forming the sealer 20. That is, a liquid-state sealing agent is produced by selectively adding a functional additive into liquid-state resin and then the solar cell module 10 is dipped in the liquid-state sealing agent, thereby forming the sealer 20. The process of manufacturing the sealer 20 is described in detail hereafter.

Referring to FIGS. 2 to 4, a method of sealing a dye-sensitized solar cell according to an embodiment of the present invention includes: a dipping step of dipping the dye-sensitized solar cell module 10 filled and sealed with an electrolyte therein into a liquid-state sealing agent (S120) and a hardening step of forming a sealer on the outer side of the solar cell module 10 by hardening the liquid-state sealing agent with the solar cell module 10 therein (S130).

First, a sealing mold 30 for dipping is manufactured (S111). The sealing mold 30 has a cavity 31 that can be filled with a sealing agent and receive the solar cell module 10. Jigs 32 for supporting the solar cell module 10 are fixed on the inner side of the cavity 31 of the sealing mold 30 (S112).

The jigs 32 protrude at predetermined distances from each other on the inner side of the cavity 31 of the sealing mold 30 and support the solar cell module 10 at a predetermined distance from the inner side of the cavity 31. When the solar cell module 10 is seated on the jig 32, the solar cell module 10 is spaced from the cavity 31 of the sealing mold 30 by the heights of the jigs 32 and the space between the solar cell module 10 and the cavity 31 is filled with a liquid-state sealing agent. Accordingly, the sealer 20 can be formed as much as the heights of the jigs 32.

A liquid-state sealing agent to be used for dipping is produced separately from the sealing mold 30 (S10). The liquid-state sealing agent is produced by using liquid-state silicon resin as a main raw material at a room temperature, and if necessary, by adding a small amount of functional additive.

The solar cell module 10 should also be manufactured first before the dipping process, separately from the sealing mold 30 and the sealing agent. The solar cell module 10 shown in FIG. 1 is in a state before the sealer 20 is formed. That is, the dipping process is performed on the solar cell module 10 with the electrolyte layer 13 completely formed by filling an electrolyte between the working electrode 11 and the counter electrode 12.

When the jigs 32 are fixed in the sealing mold 30 and a sealing agent is prepared, the solar cell module 10 is inserted into the cavity 31 of the sealing mole 30 in the dipping step S120 (S13). The solar cell module 10 is seated on the jigs 32 and the liquid-state sealing agent is filled (S120).

The liquid-stat sealing agent is put into the cavity 31 of the sealing mold 30, at a predetermined height, until the solar cell module 10 is completely dipped. The height of the sealing agent is the thickness of the sealer 20 adhering to the outer side of the solar cell module 10 after the liquid-state sealing agent is hardened.

As described above, if the solar cell module 10 is dipped in the liquid-state sealing agent 20' (S120), the liquid-state sealing agent 20' is in contact with the entire outer side of the solar cell module 10, unlike the way of covering it with a solid-state laminate film in the related art, so no air pocket is formed. The liquid-state sealing agent 20' completely surrounds the sides of the working electrode 11, the counter electrode 12, and the electrolyte layer 13.

When injection of the liquid-state sealing agent is finished in the dipping step S120, hardening step S130 is performed. In the hardening step S130, the sealing mold 30 is put into a drying space and hardened for a predetermined time. The time taken for the hardening may be a little different in accordance with the temperature of the drying space and the thickness of the sealer 20, but the sealer 20 firmly adhering to the solar cell module 10 can be achieved by hardening silicon resin under a drying condition of 60 to 80 degrees for about thirty minutes.

Bubbles may be produced in the sealer 20', so a process of removing bubbles is also performed in the hardening step S130. Deaeration for removing bubbles is achieved by rotating the sealing mold 30 in the drying space, with the solar cell module 10 dipped in the sealing agent 20'.

When the sealing mold 30 is rotated at a predetermined speed with the solar cell module 10 dipped in the sealing agent 20', bubbles in the sealing agent 20' flows to the surface of the sealing agent 20', and consequently, they come out to the air.

The deaeration can be achieved not only by rotating the sealing mold 30, but moving the sealing agent 20' using ultrasonic vibration or a mechanical vibrator. Further, other than inducing a physical motion, as described above, it may be possible to add a deaerator as a functional additive.

When an external force is applied to the sealing agent 20' for the deaeration, an air pocket that may remain on the surface of the solar cell module 10 in the dipping process can also be removed. That is, the deaeration has another function of bringing the sealing agent 20' in close contact with the surface of the solar cell module 10.

When the sealing agent 20' is hardened and the sealer 20 adheres to the solar cell module 10 in the hardening step S130, the sealing mold 30 is separated (S140).

When the sealing agent 20' is completely hardened, the sealer 20 adheres to the outer side of the solar cell module 10, so it can be separated from the sealing mold 30. For easy separation, the inner side of the sealing mold 30 may be coated to form an oil film.

As shown in FIG. 3, jig grooves 21 are left at the positions, where the jigs 32 are placed, on the separated sealer 20. When the jig grooves 21 are formed outside the working electrode 11 or the counter electrode 12, it does not interfere with sealing. However, it is preferable to minimize the jigs 21, so it is preferable to make the jigs pointed and minimize the number of support points.

Water cannot permeate into the solar cell module 10 from the outside by the sealer 20 hardened at a predetermined thickness and adhering to the outer side of the solar cell module 10, such that efficiency of the cell can be improved.

### Second Embodiment

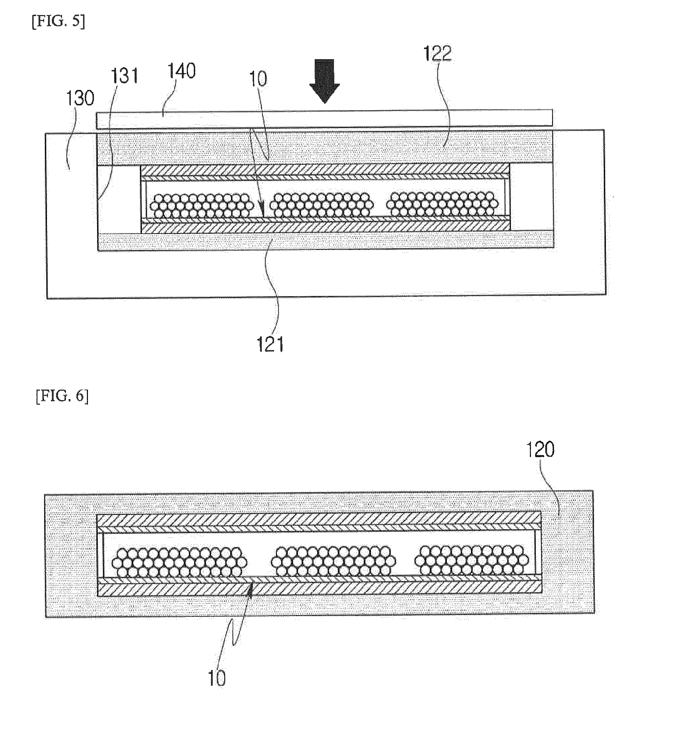

Referring to FIGS. 5 and 6, in a sealing structure of a dye-sensitized fuel cell according to another embodiment of the present invention, a sealer 120 composed of a lower sealing agent 121 and an upper sealing agent 122 surrounds the outer side of a solar cell module 10.

The sealer 120 in this embodiment is made of a transparent synthetic resin, the same as the first embodiment.

The lower sealing agent 121 and the upper sealing agent 122 are provided in the type of gel, so they are hardened after surrounding the outer side of the solar cell module 10, thereby forming the sealer 120. That is, the lower sealing agent 121 and the upper sealing agent 122 are separately formed in the type of gel by selectively adding a functional additive into transparent synthetic resin such as silicon resin. The process of manufacturing the sealer 120 is described in detail hereafter.

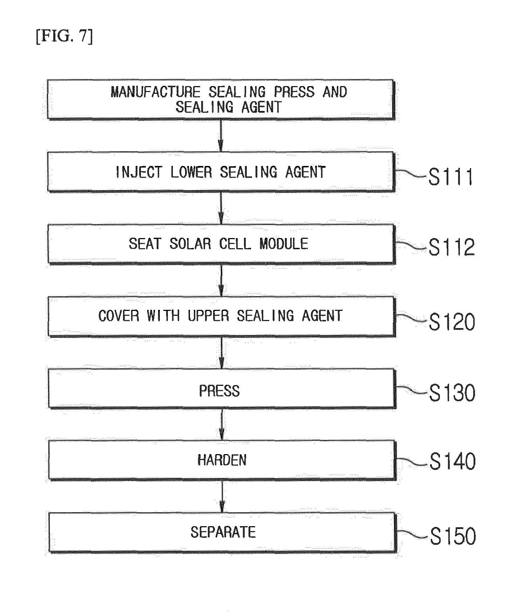

Referring to FIGS. 5 to 7, a method of sealing a dye-sensitized solar cell according to another embodiment of the present invention includes: a setting step of seating the solar cell module 10 onto the gel-state lower sealer 121 (S112); a covering step of covering the solar cell module 10 seated on the lower sealing agent 121 with the gel-state upper sealing agent 122 (S120); a pressing step of pressing the upper sealing agent 122 and the lower sealing agent 121 so that they surround the outer side of the solar cell module 10 (S130): and a hardening step of forming a sealer around the outer side of the solar cell module 10 by hardening the gel-state sealing agents with the solar cell module 10 pressed (S140).

First, a sealing press 130, the lower sealing agent 121, and the upper sealing agent 122 are formed before the sealing process. The sealing press 130 has a cavity 31 capable of receiving the solar cell module 10, the lower sealing agent 121, and the upper sealing agent 122.

Further, the solar cell module 10 should also be manufactured before the sealing process. The solar cell module 10 shown in FIG. 1 is in a state before the sealer 120 is formed. That is, the sealing process is performed on the solar cell module 10 with the electrolyte layer 13 completely formed by filling an electrolyte between the working electrode 11 and the counter electrode 12.

The lower sealing agent 121 and the upper sealing agent 122 are separately formed in the type of gel by selectively adding a functional additive to silicon resin.

When the lower sealing agent 121 is prepared, it is put and seated in the cavity 131 of the sealing process 130 manufactured in advance (S111). After the gel-state lower sealing agent 121 is seated in the cavity 131 of the sealing press 130, the solar cell module is seated on the lower sealing agent 121 (S 112).

In the setting step S 112, the lower sealing agent 121 is increased in temperature by heating the sealing press 130. The sealing press 130 is heated which the temperature maintained at a temperature of 80 to 120 degrees, so not only the upper sealing agent 122, but the lower sealing agent 121 to be put thereafter is indirectly heated. As the upper sealing agent 122 and the lower sealing agent 121 are maintained at a high temperature by such indirect heating, fluidity of the gel-type silicon resin increases.

When the solar cell module 10 is seated on the lower sealing agent 121, the get-type upper sealing agent 122 is covered on it (S120). In the covering step S120, the top of the solar cell module 10 is fully covered with the upper sealing agent 122.

After the solar cell module 10 is covered with the upper sealing agent 122, the top of the upper sealing agent 122 is pressed, thereby surrounding the outer side of the solar cell module 10 with the upper sealing agent 122 or the lower sealing agent 121 (S130).

In the pressing step S130, the upper sealing agent may be pressed from above the solar cell module 10 or the lower sealing agent 121 may be pressed from under the solar cell module 10. Further, the lower sealing agent 121 and the upper sealing agent 122 may be pressed from the sides of the solar cell module 10.

When an external force is applied in the pressing step S130 in the processing of indirectly heating the lower sealing agent 121 and the upper sealing agent 122 at a high temperature, the gel-state lower sealing agent 121 and upper sealing agent 122 are brought in close contact with the outer side of the solar cell module 10. In other words, pressure is applied in a high-temperature gel state, the space around the solar cell module 10 can be filled with the silicon resin without an empty space. In the pressing step S130, the lower sealing agent 121 or the upper sealing agent 122 can be pressed by a pressing unit 140.

When the gel-type sealing agents finish being pressed in the pressing step S130, the hardening step S140 is performed. In the hardening step S140, the sealing agents are hardened for a predetermined time, with the sealing press 130 put in the drying space. The time taken for the hardening may be a little different in accordance with the temperature of the drying space and the thickness of the sealer 120, but the sealer 120 firmly adhering to the solar cell module 10 can be achieved by hardening silicon resin under a drying condition of 60 to 80 degrees for about thirty minutes.

When the sealing agents are hardened and the sealer 120 adheres to the solar cell module 10 in the hardening step S140, the sealing press 130 is separated (S50).

When the sealing agents are completely hardened, the sealer 120 adheres to the outer side of the solar cell module 10, so it can be separated from the sealing press 130. For easy separation, the inner side of the sealing press 130 may be coated to form an oil film.

Water cannot permeate into the solar cell module 10 from the outside by the sealer 120 hardened at a predetermined thickness and adhering to the outer side of the solar cell module 10, such that efficiency of the cell can be improved.

The technical configuration of the present invention described above is not limited to specific embodiments described above and may be modified in various ways by those skilled in the art without departing from the scope of the present invention described in claims; therefore, it should be understood that the embodiments described above are just examples, not limiting the present invention. Further, all of changes and modifications from the meaning, range, and the equivalent concept of claims should be construed as being included in the scope of the present invention.

## Claims

1. A sealing structure of a dye-sensitized solar cell, comprising:
a dye-sensitized solar cell module filled and sealed with an electrolyte therein; and
a sealer made of a transparent sealing agent and sealing the solar cell module by surrounding the outer side of the solar cell module.

2. The sealing structure of claim 1, wherein the sealer is formed by hardening a liquid-state sealing agent.

3. The sealing structure of claim 1, wherein the sealer is formed by hardening a gel-state sealing agent.

4. The sealing structure of claim 1, wherein the sealing agent includes at least any one of silicon resin, ethylene vinyl acetate, polypropylene, polycarbonate, and polyethersulfone.

5. The sealing structure of claim 4, wherein the sealing agent further includes at least any one of an ultraviolet protector, an antistatic agent, and a light diffuser.

6. The sealing structure of claim 1, wherein the solar cell module includes:
a working electrode formed by coating a nanoparticle oxide on a transparent conducive substrate and adsorbing photosensitive dye molecules on the coated oxide;
a counter electrode formed by coating platinum or carbon on a conductive substrate; and
an electrolyte layer filled with an electrolyte between the working electrode and the counter electrode.

7. A method of sealing a dye-sensitized solar cell, which seals a dye-sensitized solar cell module filled and sealed with an electrolyte therein by surrounding the outer side of the solar cell module, the method comprising:
a dipping step of dipping the solar cell module into a liquid-state sealing agent; and
a hardening step of forming a sealer on the outer side of the solar cell module by hardening the liquid-state sealing agent made of transparent synthetic resin, with the solar cell module dipped therein.

8. The method of claim 7, wherein in the dipping step, a solar cell module manufactured in advance is inserted into a cavity of a sealing mold manufactured in advance and then the cavity of the sealing mold is filled with a sealing agent.

9. The method of claim 8, wherein jigs spacing the solar cell module away from the inner side of the cavity of the sealing mold are disposed into the cavity and then the solar cell module is seated on the jigs.

10. The method of claim 9, further comprising separating the sealing mold after the sealer adheres to the solar cell module in the hardening step.

11. The method of claim 7, wherein the sealing agent is hardened in a drying space at a temperature of 60 to 80 degrees for 20 to 60 minutes, in the hardening step.

12. The method of claim 8, wherein bubbles in the sealing agent that is being hardened are removed by rotating the sealing mold, in the hardening step.

13. A method of sealing a dye-sensitized solar cell, which seals a flexible dye-sensitized solar cell module filled and sealed with an electrolyte therein by surrounding the outer side of the solar cell module, the method comprising;
a setting step of seating the solar cell module onto a gel-state lower sealing agent made of transparent synthetic resin;
a covering step of covering the solar cell module seated on the lower sealing agent with a gel-state upper sealing agent;
a pressing step of pressing the upper sealing agent and the lower sealing agent to surround the outer side of the solar cell module with the upper sealing agent made of transparent synthetic resin or the lower sealing agent; and
a hardening step of forming a sealer on the outer side of the solar cell module by hardening the gel-state upper sealing agent and lower sealing agent, with the solar cell module pressed.

14. The method of claim 13, wherein the lower sealing agent is put and seated in a cavity of a sealing press manufactured in advance, in the setting step.

15. The method of claim 13, wherein the lower sealing agent and the upper sealing agent are increased in temperature by heating the sealing press in the setting step.
